# EUROPEAN PATENT SPECIFICATION

(11) **EP 4 082 408 B1**
(45) Date of publication and mention of the grant of the patent: **10.06.2026**
(21) Application number: 21170385.5
(22) Date of filing: 26.04.2021
(51) Int. Cl.: A47J 31/52, A47J 31/44

(54) **COFFEE MACHINE**
KAFFEEMASCHINE
MACHINE À CAFÉ

(43) Date of publication of application: 02.11.2022
(73) Proprietor: BSH Hausgeräte GmbH, 81739 München (DE)
(72) Inventor: Studencnik, Simon, 2390 Ravne na Koroskem (SI)

(56) References cited:
- US-A1- 2011 108 162
- US-A1- 2017 252 992

## Description

The present invention relates to beverage preparation machines, and in particular (but not exclusively) to fully automated bean to cup espresso coffee machines having user interface for displaying information to a user and for controlling the coffee machine by a user, exemplary for choosing the desired beverage.

Known beverage preparation machines including automated coffee machines have a user interface with a display for presenting information to a user about the status of the apparatus and a working mode of the machine or the need for service. Usually a user can operate the user interface by touching the touch sensitive display on presented icon or text information.

The document EP2963535A1 discloses the coffee machine comprises an electronic controller connected to a user interface, which, in turn, comprises an input unit that receives the input commands from a user, the input unit having a surface that is touch-sensitive and/or sensitive to swipe gestures with a finger, the input unit also being configured for the acquisition of commands in the form of symbols defined by sequences of points (n 1 , n 2 ,...n i ) of the sensitive surface that can be selected by touching and/or swiping the sensitive surface with a finger, the controller having a comparator configured to identify an acquired symbol by comparing it with an archive of symbols present in a memory of the machine and to activate the machine function command corresponding to the identified symbol.

The document US2011108162A1 discloses a machine for filling a receptacle with a liquid food or beverage. The machine includes a housing; an arrangement for dispensing a liquid food or a beverage to a receptacle upon a user-request; and a user-interface screen on the housing. The housing has a user-orientation for a user to request dispensing of the liquid food or beverage, the user-interface screen being arranged in this user-orientation to face the user within a user-visible housing portion that is delimited by user-visible outermost boundaries of this housing. In this user-orientation, the user-interface screen forms substantially the entire user-visible housing portion or a surface-predominant section thereof or a surface-predominant section of a plurality of distinctively user-visible sections that form together the user-visible housing portion.

The document US2017252992A1 discloses a juicer, having a door with a user interface that a user may interact with to control certain aspects of the operation of the juicer. The door may contain control circuits or other suitable electronic components associated with the user interface, which are electronically connected to additional circuits provided within the juicer.

The document US2004202757A1 discloses a system for making and delivering a customized beverage product to a consumer having a user interface, a customization director in communication with a customization data store and the user interface, wherein the customization director includes executable instructions for determining a user's customized formulation; and a beverage delivery system in communication with the customization director, wherein the beverage delivery system includes executable instructions for delivering a customized beverage product. Method for delivering a customized beverage product to an individual including the steps of obtaining consumer preference data; determining a consumer beverage formulation corresponding to the consumer preference data; and providing the consumer a customized beverage corresponding to the customized beverage formulation, utilizing one or more of delayed dilution, delayed mixing, and delayed filtering, in any order.

Known coffee machines have user interfaces provided with flat, two dimensional display that is additionally limited by steering or controlling elements therefore the space for displaying information is small and not attractive for users. Additionally, a user usually needs to operate a number of small touch area because of the small dimension of the display. That is inconvenient to operate if an action requiring to take some steps.

The objective of the present invention is to provide coffee machine with a user interface, having a display with a touch panel, wherein the user can use the user interface in a more convenient and effective way, and the display panel is easy to mount and hold in to the user interface and the structure of the user interface allows to build compact coffee machine.

In accordance with the present invention, there is provided an automatic coffee machine for preparing coffee beverages according to claim 1. Said machine has a body with a front wall with attached a user interface unit that comprises a transparent cover covering a touch sensitive display, and creates a displaying surface for displaying pictures that are used for presenting information to a user and for receiving input commands from a user, and an electronic controller connected to the user interface for controlling the user interface unit and the coffee machine. The cover consists of four or more flat covering portions connected together at an obtuse angle along edges to form a concave body on a rear side with an inner recess surface for receiving said four or more touch sensitive flat display panels, and each of them is covered respectively by one of the covering portion and each of the flat display panels displays a portion of picture, so that they together form a continuous picture.

It is to be understood that both the foregoing general description and the following detailed description are exemplary, and are intended to provide further explanation of the invention as claimed. Other advantages and features of the invention will be apparent from the following description, drawings and claims.

The cover consists of four or more covering portions connected together at an obtuse angle along edges to form the concave inner recess surface adapted to receive display panels and each of the covering portions covers a respective touch sensitive display panel, which displaying a portion of a picture that together form a continuous picture displayed on the displaying surface, and this forms a concave body on the inner side of the cover, so it is adapted to hide a coffee discharge with corresponding parts, and the coffee discharge can be moved up and down which is beneficial for reducing the size of the device and for easier planning of the structure of the them. Such cover is convex as seen from the user's side, so gives possibility to be viewed from different sides, increasing size of the display surface what is convenient for a user.

In another embodiment of the invention the user interface unit comprises a resilient bracket adapted to support the display panels in a closed position in with the display panels are pressed against the inner recess surface of the cover, therefore the display panels are efficiently pressed against the cover. The resilient bracket is made of resilient material, such as plastic or metal.

Preferably the resilient bracket is pivotally attached to the cover by a hinge that is placed in an edge recess of the cover at its lower edge and arranged in the vertical axis of symmetry of the cover for movement of the resilient bracket between the closed position and an opened position in which between the bracket and the recess surface is formed a space for receiving the display panels. Therefore the assembly process of the user interface unit is easy and time effective.

In another embodiment of the invention the resilient bracket comprises plurality of resilient surfaces, wherein each of them is individually adapted to press the display panels against the inner recess surface of the covering portions to hold the display panels in a place. So, the touch sensitive display panels are pressed elastically, that gives possibility to hold them in place despite the deformation of the cover.

In a favorable embodiment of the invention the cover is provided with a protrusion projecting above the inner recess surface, and forms a cavity adapted for receiving and fixation of a bracket free end, wherein the cavity is arranged in the vertical axis of symmetry of the cover at an opposite edge of the cover to the lower edge. Therefore the bracket is firmly attached to the cover in easy manner.

In another embodiment of the invention the front wall of the coffee machine is provided with a camera that is adapted for determining a user eyes position regarding position of the coffee machine for adapting by the electronic controller the picture displayed on the displaying surface for improving the impression of spatiality. Therefore displaying picture can be modified in relation with the angle on which a user watching the coffee machine to provide the impression of spaciousness of the displayed picture.

The present invention provides the coffee machine with an user interface unit that comprises a cover formed from several surfaces forming a convex body from the side visible to the user, and which is concave from the inner side which is adapted to receive there display panels, wherein each of the display panels displays a portion of the picture, which together form a continuous picture. Furtherly the user interface comprises the resilient bracket that is adapted to hold in place the display panels. And the bracket is movably connected to the cover from the inner side in order to easy insert and mount the display panels. So, the user interface is provided with display panels that have a large surface and show the picture in different directions, making it easier to achieve the impression of three-dimensionality. The resilient bracket can be made from metal or plastic in simple way. Production of the cover can be realized by the plastic injection molding technology, that favorably affecting the reduction of production costs.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
Fig. 1 shows a coffee machine with an user interface unit and a camera in isometric view,
Fig. 2 shows a rear side of a user interface unit with a bracket in opened position in isometric view,
Fig. 3 shows an another isometric view of a rear side of a user interface unit,
Fig. 4 shows a cross-sectional view of the user interface unit with a bracket in closed position.

In cooperation with attached drawings, the technical contents and detailed description of the present invention are described thereinafter according to a preferable embodiment, being not used to limit its executing scope. Any equivalent variation and modification falling within the scope of the appended claims is encompassed by the invention.

In the following description of the preferred embodiments of the present invention, similar identical reference numbers designate identical or comparable components.

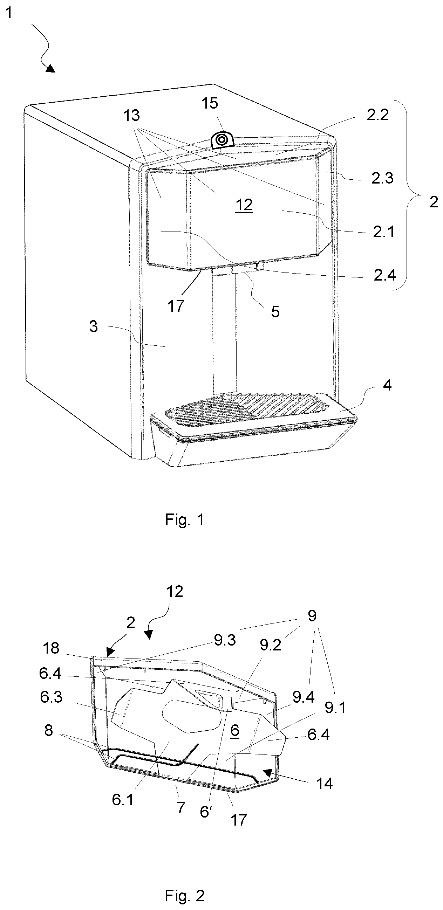

Fig. 1 shows a coffee machine 1 with an user interface unit 12 and with a camera 15 in isometric view. A body of the coffee machine 1 has an essentially cuboid shape and comprises a vertical front wall 3. The user interface unit 2 is fixed to an upper portion of the front wall 3. The user interface unit 12 comprises a transparent cover 2 consist of four flat covering portions 2.1, 2.2, 2.3, 2.4 connected together at an obtuse angle along edges to form a convex body from a front side, and a concave body on a rear side with an inner recess surface 14 (not shown on this figure) for receiving four touch sensitive flat display panels 9.1, 9.2, 9.3, 9.4. Each of them is covered respectively by one of the covering portions 2.1, 2.2, 2.3, 2.4. Each of the display panels displays a portion of the picture that together form one continuous picture displayed on the displaying surface 13 presenting information to a user and for receiving input commands from a user. The display panels are held in place by a resilient bracket 6 (not shown on this figure) that is movably connected to the cover 2 at a lower edge 17. The user interface unit 12 is empty inside, so it is adapted to hide a coffee discharge 5 with corresponding parts, and the coffee discharge 5 can be moved up and down. Below the coffee discharge 5 has been arranged a drip tray 4 having a grid as a place for a cup. The upper portion of the front wall 3 comprises the camera 15 which cooperate with an electronic controller (not shown on this figure) that is connected to the user interface 12 by wires 8 ( not shown on this figure).

Fig. 2 shows a rear, inner side of the user interface unit 12 with the bracket 6 that is in opened position in isometric view. The user interface unit 2 is equipped with the rib 18 utilized for fixing it to the front wall 3 of the coffee machine 1 (not shown on this figure). The user interface unit 12 also comprises a transparent cover 2 consists of four flat covering portions 2.1, 2.2, 2.3, 2.4 connected together at the obtuse angle along edges to form a concave body on a rear side with an inner recess surface 14 for receiving four touch sensitive flat display panels 9.1, 9.2, 9.3, 9.4. Each of them is covered respectively by one of the covering portions 2.1, 2.2, 2.3, 2.4. The resilient bracket 6 is rotated to an opened position about the hinge 7 that is placed in an edge recess 10 of the cover 2 at its lower edge 17 and arranged in the vertical axis of symmetry of the cover 2. The resilient bracket 6 comprises four resilient surfaces 6.1, 6.2, 6.3, 6.4, wherein at a closed position each of them is adapted individually to press the display panels 9.1, 9.2, 9.3, 9.4 against the inner recess surface 14 of the covering portions 2.1, 2.2, 2.3, 2.4 to hold the display panels 9.1, 9.2, 9.3, 9.4 in a place. The display panels 9.1, 9.2, 9.3, 9.4 are connected to the electronic controller (not shown on this figure) by the wires 8.

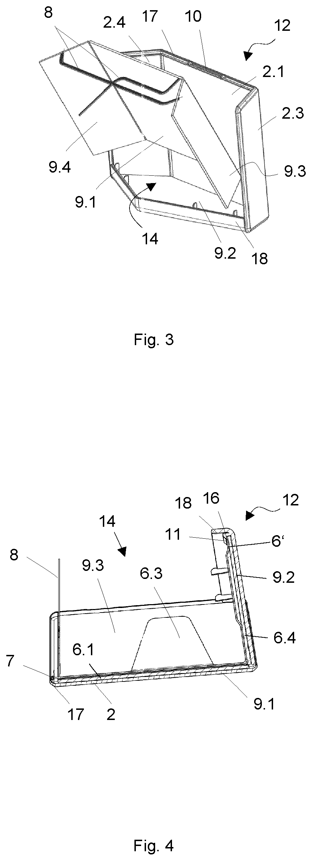

Fig. 3 shows an another isometric view of a rear, inner side of a user interface unit 12. The user interface unit 2 is equipped with the rib 18 utilized for fixing it to the front wall 3 of the coffee machine 1 (not shown on this figure). The user interface unit 12 comprises also a transparent cover 2 consist of four flat covering portions 2.1, 2.2, 2.3, 2.4 connected together at the obtuse angle along edges to form a concave body on a rear side with an inner recess surface 14 for receiving four touch sensitive flat display panels, wherein three of them display panels 9.1, 9.3, 9.4 are pre-connected to each other. Each of display panels is covered respectively by one of the covering portions 2.1, 2.2, 2.3, 2.4. The resilient bracket 6 holds them in place (not shown on this figure). The display panels 9.1, 9.2, 9.3, 9.4 are connected to the electronic controller (not shown on this figure) by the wires 8.

Fig. 4 shows a cross-sectional view of the user interface unit with a bracket 6 in closed position. The resilient bracket 6 is rotated to the closed position about the hinge 7 that is placed in an edge recess 10 of the cover 2 at its lower edge 17 and arranged in the vertical axis of symmetry of the cover 2. Furtherly the cover 2 is provided with a protrusion 11 that projecting above the inner surface 14 and forms a cavity 16 adapted for receiving and fixation a bracket free end 6'. The cavity 16 is arranged in the vertical axis of symmetry of the cover 2 at an opposite edge of the cover 2 to the lower edge 17. The resilient bracket 6 comprises four resilient surfaces 6.1, 6.2, 6.3, 6.4, wherein at a closed position each of them is individually adapted to press the display panels 9.1, 9.2, 9.3, 9.4 against the inner recess surface 14 of the covering portions 2.1, 2.2, 2.3, 2.4 to hold the display panels 9.1, 9.2, 9.3, 9.4 in a place. The display panels 9.1, 9.2, 9.3, 9.4 are connected to the electronic controller (not shown on this figure) by the wires 8.

Accordingly, the user interface unit 12 of convex shape comprises the transparent cover 2, that is built from several substantially flat covering portions 2.x and each of them is provided with the display panel 9.x mounted from the inner side of the cover 2 on the inner recess surface 14. Furtherly, each of display panels 9.x displays a portion of the picture they together form a continuous picture displayed on the displaying surface 13. Because of the convex shape of the cover 2, the display panels 9.x display the portion of picture on the different angles in relation to a user eyes therefore the effect of the spatiality can be improved and also there is more space to display the necessary picture or command. The display panels 9.x are held in place by the resilient bracket 6 that presses them against the inner recess surface 14 and that is connected with the cover 2 in two points. A peripheral portion of the bracket 6 is movable connected by the hinge 7 and on the opposite side the bracket free end 6' fixedly connects the bracket 6 to the cover 2 in the closed position. Therefore the present invention is easy to implement in production and that is time and cost effective.

Although the invention has been explained in relation to its preferred embodiment(s) as mentioned above, it is to be understood that many other possible modifications and variations can be made without departing from the scope of the present invention as defined by the appended claims.

### List of reference signs.

- 1: coffee machine
- 2: cover
- 2.1-2.4; 2.x: portion of the cover
- 3: front wall
- 4: drip tray
- 5: coffee discharge
- 6: resilient bracket
- 6.1-6.4; 6.x: bracket resilient surfaces
- 7: hinge
- 8: electric wires
- 9: display panel
- 9.1-9.1; 9.x: display panels
- 10: edge recess
- 11: protrusion
- 12: user interface unit
- 13: displaying surface
- 14: recess surface
- 15: camera
- 16: cavity
- 17: lower edge
- 18: rib

## Claims

1. An automatic coffee machine (1) for preparing coffee beverages having a body with a front wall (3) with attached a user interface unit (12) that comprises a transparent cover (2) covering a touch sensitive display (9), and creates a displaying surface (13) for displaying pictures that are used for presenting information to a user and for receiving input commands from a user, and an electronic controller connected to the user interface (12) for controlling the user interface unit (12) and the coffee machine (1), **characterized in that** the touch sensitive display (9) comprises four or more touch sensitive flat display panels (9.x) and **in that** the cover (2) consists of four or more flat covering portions (2.x) connected together at an obtuse angle along edges to form a concave body on a rear side with an inner recess surface (14) for receiving said four or more touch sensitive flat display panels (9.x), and each of said four or more touch sensitive flat display panels is covered respectively by one of the covering portion (2.x), and **in that** each of the flat display panels (9.x) displays a portion of picture, so that they together form a continuous picture.

2. The automatic coffee machine according to claim 1, **characterized in that** the user interface unit (12) comprises a resilient bracket (6) adapted to support the display panels (9.x) in a closed position in with the displays panels (9.x) are pressed against the inner recess surface (14) of the cover (2).

3. The automatic coffee machine according to claim 2, **characterized in that** the resilient bracket (6) is pivotally attached to the cover (2) by a hinge (7) that is placed in an edge recess (10) of the cover (2) at its lower edge (17) and arranged in the vertical axis of symmetry of the cover (2) for movement the resilient bracket (6) between the closed position and an opened position in which between the bracket (6) and the recess surface (14) is formed a space for receiving the display panels (9.x).

4. The automatic coffee machine according to claim 2 or 3, characterized that the resilient bracket (6) comprises plurality of resilient surfaces (6.x), wherein each of them is individually adapted to press the display panels (9.x) against the inner recess surface (14) of the covering portions (2.x) to hold the display panels (9.x) in a place.

5. The automatic coffee machine according to any of the preceding claims, **characterized in that** the cover (2) is provided with a protrusion (11) that form a cavity (16) adapted for receiving and fixation of a bracket free end (6'), wherein the cavity (16) is arranged in the vertical axis of symmetry of the cover (2) at an opposite edge of the cover (2) to the lower edge (17).

6. The automatic coffee machine according to any of the preceding claims, **characterized in that** the front wall (3) of the coffee machine (1) is provided with a camera (15) that is adapted for determining a user eyes position regarding position of the coffee machine (1) for adapting by the electronic controller the picture displayed on the displaying surface (13) for improving the spatiality.

## Patentansprüche

1. Kaffeeautomat (1) zum Zubereiten von Kaffeegetränken, der einen Hauptteil mit einer Vorderwand (3) mit einer daran angebrachten Benutzerschnittstelleneinheit (12) aufweist, die eine transparente Abdeckung (2) umfasst, welche eine berührungsempfindliche Anzeige (9) abdeckt, und eine Anzeigefläche (13) zum Anzeigen von Abbildungen bietet, die zum Präsentieren von Informationen für einen Benutzer und zum Empfangen von Eingabebefehlen von einem Benutzer dient, und eine mit der Benutzerschnittstelle (12) verbundene elektronische Steuerung zum Steuern der Benutzerschnittstelleneinheit (12) und der Kaffeemaschine (1), **dadurch gekennzeichnet, dass** die berührungsempfindliche Anzeige (9) vier oder mehr berührungsempfindliche, flache Anzeigefelder (9.x) umfasst und dass die Abdeckung (2) aus vier oder mehr flachen Abdeckteilen (2.x) besteht, die an Rändern entlang in einem stumpfen Winkel miteinander verbunden sind und so auf einer Rückseite einen konkaven Hauptteil mit einer Aussparungsinnenfläche (14) zum Aufnehmen der vier oder mehr berührungsempfindlichen, flachen Anzeigefelder (9.x) bilden, und jedes der vier oder mehr berührungsempfindlichen, flachen Anzeigefelder jeweils mit einem der Abdeckteile (2.x) abgedeckt ist und dass jedes der flachen Anzeigefelder (9.x) einen Teil der Abbildung anzeigt, so dass sie zusammen eine zusammenhängende Abbildung bilden.

2. Kaffeeautomat nach Anspruch 1, **dadurch gekennzeichnet, dass** die Benutzerschnittstelleneinheit (12) eine elastische Halterung (6) umfasst, die so ausgelegt ist, dass sie in einer geschlossenen Position, in der die Anzeigefelder (9.x) an die Aussparungsinnenfläche (14) der Abdeckung (2) gedrückt werden, die Anzeigefelder (9.x) abstützt.

3. Kaffeeautomat nach Anspruch 2, **dadurch gekennzeichnet, dass** die elastische Halterung (6) über ein Scharnier (7), das in einer Randaussparung (10) am unteren Rand (17) der Abdeckung (2) platziert ist, schwenkbar an der Abdeckung (2) angebracht und für eine Bewegung zwischen der geschlossenen und einer offenen Position, in der zwischen der Halterung (6) und der Aussparungsfläche (14) ein Zwischenraum zum Aufnehmen der Anzeigefelder (9.x) besteht, entlang der vertikalen Symmetrieachse der Abdeckung (2) angeordnet ist.

4. Kaffeeautomat nach Anspruch 2 oder 3, **dadurch gekennzeichnet, dass** die elastische Halterung (6) mehrere elastische Flächen (6.x) umfasst, wobei jede davon individuell so angepasst ist, dass sie die Anzeigefelder (9.x) an die Aussparungsinnenfläche (14) der Abdeckteile (2.x) drückt und so die Anzeigefelder (9.x) an Ort und Stelle festhält.

5. Kaffeeautomat nach einem der vorhergehenden Ansprüche, **dadurch gekennzeichnet, dass** die Abdeckung (2) mit einem Vorsprung (11) versehen ist, der einen Hohlraum (16) bildet, welcher so ausgelegt ist, dass er ein freies Halterungsende (6') aufnimmt und fixiert, wobei der Hohlraum (16) an einem dem unteren Rand (17) gegenüberliegenden Rand der Abdeckung (2) entlang der vertikalen Symmetrieachse der Abdeckung (2) angeordnet ist.

6. Kaffeeautomat nach einem der vorhergehenden Ansprüche, **dadurch gekennzeichnet, dass** die Vorderwand (3) der Kaffeemaschine (1) mit einer Kamera (15) versehen ist, die so ausgelegt ist, dass sie die Augenposition eines Benutzers in Bezug auf eine Position der Kaffeemaschine (1) ermittelt, damit die elektronische Steuerung die Abbildung, die auf der Anzeigefläche (13) angezeigt wird, zur Verbesserung der Räumlichkeit anpassen kann.

## Revendications

1. Machine à café automatique (1) pour la préparation de boissons à base de café, ayant une carcasse avec une paroi avant (3) sur laquelle est fixée une unité d'interface utilisateur (12) qui comprend un couvercle transparent (2) couvrant un écran tactile (9), et forme une surface d'affichage (13) pour l'affichage d'images utilisées pour présenter des informations à un utilisateur et pour recevoir des commandes d'entrée d'un utilisateur, et un dispositif de commande électronique relié à l'interface utilisateur (12) pour commander l'unité d'interface utilisateur (12) et la machine à café (1), **caractérisée en ce que** l'écran tactile (9) comprend quatre panneaux d'affichage plats tactiles (9.x) ou plus et **en ce que** le couvercle (2) consiste en quatre parties de couverture plates (2.x) ou plus reliées entre elles selon un angle obtus le long de bords pour former un corps concave sur un côté arrière avec une surface de renfoncement interne (14) pour la réception desdits quatre panneaux d'affichage plats tactiles (9.x) ou plus, et chacun desdits quatre panneaux d'affichage plats tactiles ou plus est respectivement couvert par l'une des parties de couverture (2.x), et **en ce que** chacun des panneaux d'affichage plats (9.x) affiche une partie d'image, de sorte qu'elles forment ensemble une image continue.

2. Machine à café automatique selon la revendication 1, **caractérisée en ce que** l'unité d'interface utilisateur (12) comprend un support élastique (6) adapté pour maintenir les panneaux d'affichage (9.x) dans une position fermée, dans laquelle les panneaux d'affichage (9.x) sont pressés contre la surface de renfoncement interne (14) du couvercle (2).

3. Machine à café automatique selon la revendication 2, **caractérisée en ce que** le support élastique (6) est fixé de façon pivotante au couvercle (2) par une charnière (7) qui est placée dans un renfoncement de bord (10) du couvercle (2) au niveau de son bord inférieur (17) et disposé dans l'axe de symétrie vertical du couvercle (2) pour le déplacement du support élastique (6) entre la position fermée et une position ouverte dans laquelle un espace est formé entre le support (6) et la surface de renfoncement (14) pour la réception des panneaux d'affichage (9.x).

4. Machine à café automatique selon la revendication 2 ou 3, **caractérisée en ce que** le support élastique (6) comprend une pluralité de surfaces élastiques (6.x), dans laquelle chacune d'elles est adaptée individuellement pour presser les panneaux d'affichage (9.x) contre la surface de renfoncement interne (14) des parties de couverture (2.x) pour maintenir les panneaux d'affichage (9.x) en place.

5. Machine à café automatique selon l'une quelconque des revendications précédentes, **caractérisée en ce que** le couvercle (2) est doté d'une saillie (11) qui forme une cavité (16) adaptée pour recevoir et fixer une extrémité libre de support (6'), dans laquelle la cavité (16) est disposée dans l'axe de symétrie vertical du couvercle (2), en un bord du couvercle (2) opposé au bord inférieur (17).

6. Machine à café automatique selon l'une quelconque des revendications précédentes, **caractérisée en ce que** la paroi avant (3) de la machine à café (1) est dotée d'une caméra (15) qui est adaptée pour déterminer la position des yeux d'un utilisateur par rapport à la position de la machine à café (1), pour que le dispositif de commande électronique adapte l'image affichée sur la surface d'affichage (13) pour améliorer la spatialité.
